# EUROPÄISCHE PATENTANMELDUNG

(11) **EP 1 908 984 A2**
(43) Veröffentlichungstag der Anmeldung: **09.04.2008**
(21) Anmeldenummer: 07018759.6
(22) Anmeldetag: 25.09.2007
(51) Int. Cl.: F16F 9/48

(54) **Schwingungsdämpfer mit amplitudenselektiver Dämpfkraft**

(30) Priorität: 05.10.2006 DE 102006047093
(71) Anmelder: ZF Friedrichshafen AG, 88038 Friedrichshafen (DE)
(72) Erfinder: Hammer, Thomas, 97653 Bischofsheim (DE)

(57) **Zusammenfassung**

Schwingungsdämpfer (1), umfassend einen Zylinder (3), in dem eine Kolbenstange (5) axial beweglich geführt ist, wobei die Kolbenstange (5) mit einem Kolben (7) verbunden ist, der den Zylinder (3) in einen kolbenstangenfernen (9) und einen kolbenstangenseitigen Arbeitsraum (11) unterteilt, wobei im kolbenstangenseitigen Arbeitsraum (11) auf der Kolbenstange (5) ein Ventilring (27) gleitend gelagert ist, der in Abhängigkeit seiner Axialposition eine Ventilöffnung zum Abfluss von Dämpfmedium in ihrem Querschnitt beeinflusst, wobei im kolbenstangenseitigen Arbeitsraum (11) eine Ventilhülse (19) angeordnet ist, in der der Ventilring (27) axial beweglich geführt ist.

## Beschreibung

Die Erfindung betritt einen Schwingungsdämpfer mit amplitudenselektiver Dämpfkraft gemäß dem Oberbegriff von Patentanspruch 1.

Aus der DE 39 14 298 C1 ist ein hydraulischer Schwingungsdämpfer mit einer Kolbenstange bekannt, die zusammen mit einem Kolben in einem Zylinder axial beweglich geführt ist. Der Kolben unterteilt den Zylinder in einen kolbenstangenseitigen und einen kolbenstangenfernen Arbeitsraum, die beide mit einem Dämpfmedium gefüllt sind. Im kolbenstangenseitigen Arbeitsraum ist auf der Kolbenstange ein Ventilring gleitend angeordnet, der durch seine Axialposition eine Ventilöffnung in ihrem Querschnitt ansteuert. Der Ventilring steht in Reibkontakt mit der Kolbenstange, so dass der Ventilring bei einer Hubbewegung der Kolbenstange eine Axialbewegung ausführt und dabei Dämpfvolumen aus dem kolbenstangenseitigen Arbeitsraum abfließen kann, bis der Ventilring nach einem definierten Hubweg die Ventilöffnung verschließt.

Die DE 39 14 298 C1 beschreibt eine Prinziplösung. Aufgabe der vorliegenden Erfindung ist es eine fertigungsgerechte Konstruktion bereit zustellen.

Erfindungsgemäß wird die Aufgabe dadurch gelöst, dass im kolbenstangenseitigen Arbeitsraum eine Ventilhülse angeordnet ist, in der der Ventilring axial beweglich geführt ist.

Der große Vorteil besteht darin, dass alle die Funktion der amplitudenselektiven Dämpfkraft bestimmenden Bauteile innerhalb der Ventilhülse angeordnet sind und diese Baueinheit in den Zylinder einschiebbar ist, so dass keine aufwändigen Änderungen am Zylinder notwendig sind. Diese Baueinheit könnte auf einem Prüfstand unabhängig vom Schwingungsdämpfer überprüft werden.

In weiterer vorteilhafter Ausgestaltung stützt sich die Ventilhülse zumindest mittelbar an einer den Zylinder axial abschließenden Kolbenstangenführung ab. Des Weiteren ist vorgesehen, dass die Ventilhülse einen Boden mit einer Durchgangsöffnung für die Kolbenstange aufweist, wobei der Boden mindestens eine Anschlussöffnung aufweist, die von einer Stirnseite des Ventilrings verschließbar ist.

Zur Anpassung der Dämpfkraftkennlinie im Hubbereich der amplitudenselektiven Dämpfkraft bestimmt eine Voröffnungsscheibe den maximal wirksamen Querschnitt der Ventilöffnung. Durch einen einfachen Austausch der Voröffnungsscheibe kann mit einer ansonsten unveränderten Ventilhülse in den Dämpfkraftverlauf eingegriffen werden.

Dabei ist vorgesehen, dass die Voröffnungsscheibe zwischen der Ventilhülse und der Kolbenstangenführung verspannt ist.

Bei der konstruktiven Ausgestaltung der Ventilöffnung stehen verschiedene Möglichkeiten zur Verfügung. Zum einen kann man die Ventilöffnung in dem Zylinder ausführen.

Eine sehr vorteilhafte Variante besteht darin, dass die Ventilöffnung in der Kolbenstangenführung ausgeführt ist. Dabei wird die Ventilöffnung in der Kolbenstangenführung von einer stirnseitigen Nut gebildet, die durch eine axiale Anschlagfläche für den Zylinder verläuft. Die Herstellung der Ventilöffnung kann insbesondere bei einer Kolbenstange aus einem Sinterwerkstoff sehr einfach und praktisch kostenneutral vorgenommen werden.

Eine weitere Maßnahme zur Beibehaltung eines möglichst einfachen Zylinders besteht darin, dass die Ventilhülse einen Axialkanal bestimmt, der Dämpfmedium in eine von der Ventilhülse begrenzten Arbeitskammer zwischen dem Ventilring und der Kolbenstangenführung strömen lässt.

Der Axialkanal wird von einer zumindest partiellen Außendurchmesserreduzierung der Ventilhülse gebildet. Man kann den Außendurchmesser vollumfänglich verkleinern oder mindestens eine Nut vorsehen.

Zur Minimierung einer Leckage zwischen der Ventilhülse- und dem Zylinder ist die Ventilhülse zur Innenwandung des Zylinders mittels mindestens einer Dichtung abgedichtet.

Dabei ist die radiale Vorspannung der Dichtung derart gewählt, dass über die Dichtung die Axialposition der Ventilhülse gesichert ist. Man nutzt einfach die Reibungskraft zwischen der Dichtung und der Innenwandung des Zylinders aus.

Gemäß einem vorteilhaften Unteranspruch weist die Ventilhülse zwischen zwei durch den Ventilring unterteilte Abschnitte der Arbeitskammer, bestimmt durch die Kolbenstange und der Innenwandung der Ventilhülse, mindestens eine Strömungsverbindung auf. Der Ventilring soll möglichst frei von Druckkräften in den Arbeitskammern rein wegabhängig von der Kolbenstange betätigt werden.

Beispielhaft wird die Strömungsverbindung von einer Längsnut in der Innenwandung der Ventilhülse gebildet, so dass der Ventilring eine gleichmäßig kreisringförmige Formgebung aufweisen kann.

Der Ventilring umfasst einen Reibring und einen zum Reibring radial beweglichen Dichtring, der den Zustrom in die Ventilöffnung beeinflusst. Damit kann ein radialer Versatz zwischen der Ventilhülse und dem Zylinder bezogen auf die Kolbenstange kompensiert werden.

Dabei umschließt der Dichtring den Reibring außenseitig und umfasst einen Mantelabschnitt und einen Boden, wobei sich der Reibring innenseitig am Boden abstützt.

Eine weitere Maßnahme zum Druckausgleich am Ventilring besteht darin, dass die Arbeitskammer zwischen dem Ventilring und einem Deckel der Ventilhülse eine Drosselöffnung zum kolbenstangenseitigen Arbeitsraum aufweist. Bei einer Kolbenstangenbewegung wird der Ventilring beidseitig mit Dämpfmedium beaufschlagt.

Die Drosselöffnung wird von dem Deckel in Verbindung mit einer zur Ventilhülse verspannten Drosselscheibe gebildet. Durch Austausch der Drosselscheibe kann die Verteilung des in die Arbeitskammern einströmenden Dämpfmediumvolumens angepasst werden.

Anhand der folgenden Figurenbeschreibung soll die Erfindung näher erläutert werden.

Es zeigt:
Fig. 1 Schwingungsdämpfer mit einer Ventilöffnung im Zylinder
Fig. 2 Schwingungsdämpfer einer Ventilöffnung in der Kolbenstangenführung

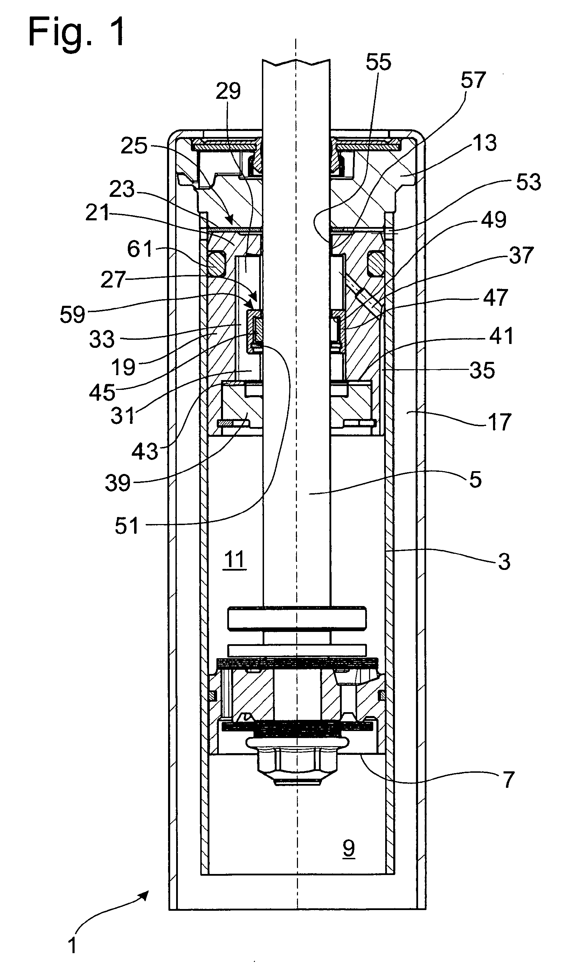

Die Figur 1 zeigt einen Ausschnitt von einem Schwingungsdämpfer 1, der einen Zylinder 3 aufweist, in dem eine Kolbenstange 5 mit einem Kolben 7 axial beweglich gelagert ist. Der Kolben 7 unterteilt den Zylinder 3 in einen kolbenstangenfernen und einen kolbenstangenseitigen Arbeitsraum 9; 11, wobei eine Kolbenstangenführung 13 den kolbenstangenseitigen Arbeitsraum 11 des Zylinders 3 verschließt.

Der Zylinder 3 wird von einem Behälterrohr 15 umschlossen, wobei ein dadurch bestimmter Ausgleichsraum 17 das Volumen der ein- und ausfahrenden Kolbenstange 5 kompensiert.

Im kolbenstangenseitigen Arbeitsraum 11 ist eine Ventilhülse 19 angeordnet, deren Boden 21 über eine Drosselscheibe 23 mittelbar an einer in Richtung des Arbeitsraums 11 weisenden Stirnfläche 25 der Kolbenstangenführung 13 anliegt. Innerhalb der Ventilhülse 19 ist ein Ventilring 27 auf der Mantelfläche der Kolbenstange 5 axial gleitend gelagert, so dass innerhalb der Ventilhülse zwei Arbeitskammern 29; 31 vorliegen. Zwischen den beiden Arbeitskammern 29; 31 besteht eine Strömungsverbindung 33, die z. B. von einer Längsnut in der Innenwandung der Ventilhülse 13 gebildet wird.

Die Ventilhülse 19 wird radial von der Innenwandung des Zylinders 3 geführt. Eine Außendurchmesserreduzierung in der Form mindestens einer Axialnut 35 bildet einen Axialkanal zwischen dem kolbenstangenseitigen Arbeitsraum 11 und der zwischen dem Ventilring 27 und dem Boden 21 vorliegenden Arbeitskammer 29 innerhalb der Ventilhülse 19, wobei zwischen dem Axialkanal 35 und der Arbeitskammer 29 noch mindestens ein Verbindungskanal 37 besteht. Man kann auch mehrere Axialkanäle Die von einem Deckel 39 der Ventilhülse 19 und dem Ventilring 27 begrenzte Arbeitskammer 31 weist eine Drosselöffnung 41 zum kolbenstangenseitigen Arbeitsraum 11 auf. Die Drosselöffnung 41 wird von mindestens einer zwischen dem Deckel und der Ventilhülse angeordneten Drosselscheibe 43 gebildet.

Der Ventilring 27 verfügt über einen auf der Kolbenstange gleitenden Reibring 45 und einen den Reibring mit einer Mantelfläche außenseitig umschließenden Dichtring 47, wobei sich der Dichtring 47 radial in Grenzen zum Reibring 45 bewegen kann. Der Reibring 45 kann sich axial an einem Boden 49 des Dichtrings 47 und einem Sicherungsring 51 abstützen.

In dieser Variante der Erfindung ist im Zylinder eine Ventilöffnung 53 ausgeführt, die über die Voröffnungsscheibe 23 und einen Anschlusskanal 55 im Boden 21 der Ventilhülse 19 an die Arbeitskammern 29; 31 der Ventilhülse 19 angeschlossen ist. Der Anschlusskanal 55 wird von einer Durchgangsöffnung 57 im Boden gebildet, durch die auch die Kolbenstange 5 verläuft, wobei der Ventilring 27 die Durchgangsöffnung 57 mit seiner oberen Stirnfläche 59 verschließt.

Bei einer Kolbenstangenbewegung in Ausfahrrichtung gleitet der Ventilring 27 innerhalb der Ventilhülse 19 aufgrund der Reibkraft zur Kolbenstange 5 synchron mit. Aus dem kolbenstangenseitigen Arbeitsraum 11 wird Dämpfmedium über den Axialkanal 35 zwischen der Ventilhülse 19 und der Innenwandung des Zylinders 3 in die Ventilhülse 19 verdrängt. Ein kleinerer Volumenanteil fließt über den Deckel 39 und die Drosselöffnung 41 der Drosselscheibe 43 in die untere Arbeitskammer 31, wobei über den Axialkanal 33 zwischen den Arbeitskammern 29; 31 stets ein Druckausgleich erfolgt. Die bei der Kolbenstangenausfahrbewegung erzeugte Dämpfkraft wird von der Voröffnungsscheibe 23 zwischen dem Boden 21 und der Kolbenstangenführung 13 bestimmt.

Nach einer bestimmten Hublänge der Kolbenstangenführung kommt der Ventilring 27 innenseitig am Boden 21 der Ventilhülse 19 zur Anlage und dichtet den Anschlusskanal 55 zur Ventilöffnung 53 und den Verbindungskanal 37 ab. Der Axialkanal 35 zwischen der Zylinderwandung und der Ventilhülse wird durch eine Dichtung 61 endseitig verschlossen, so dass das dort befindliche Dämpfmedium nicht weiterfließen kann. Zusätzlich dient die Dichtung 61 auch der axialen Fixierung der Ventilhülse 19 innerhalb des Zylinders 3. Ab dieser Hublage wird die Dämpfkraft von Dämpfventilen, z. B. im Kolben 7, bestimmt. Das Volumen in den Arbeitskammern 29; 31 der Ventilhülse 19 wird bei der Kolbenstangenausfahrbewegung über die Drosselöffnung 41 komprimiert, so dass eine zusätzliche hydraulische Schließkraft auf den Ventilring 27 wirkt.

Bei einer Kolbenstangeneinfahrbewegung wird der Ventilring 19 aufgrund der Reibkraft zwischen dem Reibring und der Kolbenstange 5 von dem Boden 21 abgehoben und gibt den Anschlusskanal 55 wieder frei.

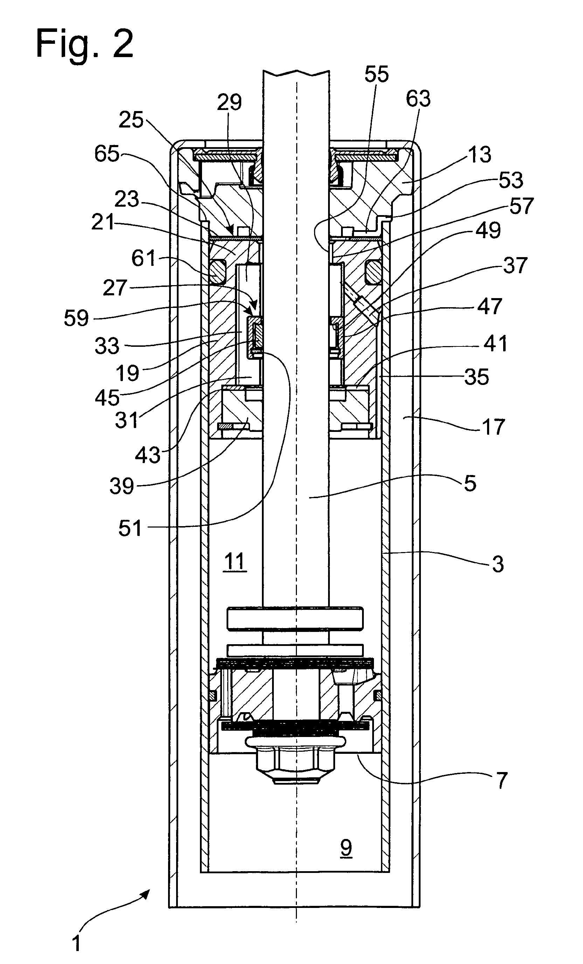

Die Figur 2 ist hinsichtlich der Ventilhülse und den darin befindlichen Bauteilen identisch mit der Fig. 1. Abweichend wird die Ventilöffnung 53 von einer stirnseitigen Nut 63 innerhalb der Kolbenstangenführung 13 gebildet, die durch eine axiale Anschlagfläche 65 für den Zylinder verläuft und diesen damit stirnseitig umströmen lässt.

## Patentansprüche

1. Schwingungsdämpfer, umfassend einen Zylinder, in dem eine Kolbenstange axial beweglich geführt ist, wobei die Kolbenstange mit einem Kolben verbunden ist, der den Zylinder in einen kolbenstangenfernen und einen kolbenstangenseitigen Arbeitsraum unterteilt, wobei im kolbenstangenseitigen Arbeitsraum auf der Kolbenstange ein Ventilring gleitend gelagert ist, der in Abhängigkeit seiner Axialposition eine Ventilöffnung zum Abfluss von Dämpfmedium in ihrem Querschnitt beeinflusst,
**dadurch gekennzeichnet,**
**dass** im kolbenstangenseitigen Arbeitsraum (11) eine Ventilhülse (19) angeordnet ist, in der der Ventilring (27) axial beweglich geführt ist.

2. Schwingungsdämpfer nach Anspruch 1,
**dadurch gekennzeichnet,**
**dass** sich die Ventilhülse (19) zumindest mittelbar an einer den Zylinder (3) axial abschließenden Kolbenstangenführung (13) abstützt.

3. Schwingungsdämpfer nach Anspruch 1,
**dadurch gekennzeichnet,**
**dass** die Ventilhülse (19) einen Boden (21) mit einer Durchgangsöffnung (57) für die Kolbenstange (5) aufweist, wobei der Boden (21) mindestens eine Anschlussöffnung (55) aufweist, die von einer Stirnseite (59) des Ventilrings (27) verschließbar ist.

4. Schwingungsdämpfer nach Anspruch 1,
**dadurch gekennzeichnet,**
**dass** eine Voröffnungsscheibe (23) den maximal wirksamen Querschnitt der Ventilöffnung (53) bestimmt.

5. Schwingungsdämpfer nach Anspruch 4,
**dadurch gekennzeichnet,**
**dass** die Voröffnungsscheibe (23) zwischen der Ventilhülse (19) und der Kolbenstangenführung (13) verspannt ist.

6. Schwingungsdämpfer nach Anspruch 1,
**dadurch gekennzeichnet,**
**dass** die Ventilöffnung (53) in dem Zylinder (3) ausgeführt ist.

7. Schwingungsdämpfer nach Anspruch 1,
**dadurch gekennzeichnet,**
**dass** die Ventilöffnung in (53) der Kolbenstangenführung (13) ausgeführt ist.

8. Schwingungsdämpfer nach Anspruch 7,
**dadurch gekennzeichnet,**
**dass** die Ventilöffnung (53) in der Kolbenstangenführung (13) von einer stirnseitigen Nut (63) gebildet wird, die durch eine axiale Anschlagfläche (65) für den Zylinder (3) verläuft.

9. Schwingungsdämpfer nach Anspruch 1,
**dadurch gekennzeichnet,**
**dass** die Ventilhülse (19) einen Axialkanal (35) bestimmt, der Dämpfmedium in eine von der Ventilhülse (19) begrenzten Arbeitskammer (29) zwischen dem Ventilring (27) und der Kolbenstangenführung (13) strömen lässt.

10. Schwingungsdämpfer nach Anspruch 9,
**dadurch gekennzeichnet,**
**dass** der Axialkanal (35) von einer zumindest partiellen Außendurchmesserreduzierung der Ventilhülse (19) gebildet wird.

11. Schwingungsdämpfer nach Anspruch 1,
**dadurch gekennzeichnet,**
**dass** die Ventilhülse (19) zur Innenwandung des Zylinders (3) mittels mindestens einer Dichtung (61) abgedichtet ist.

12. Schwingungsdämpfer nach Anspruch 11,
**dadurch gekennzeichnet,**
**dass** die radiale Vorspannung der Dichtung (61) derart gewählt ist, dass über die Dichtung die Axialposition der Ventilhülse (19) gesichert ist.

13. Schwingungsdämpfer nach Anspruch 1,
**dadurch gekennzeichnet,**
**dass** die Ventilhülse (19) zwischen zwei durch den Ventilring (27) unterteilten Abschnitten der Arbeitskammer (31; 29), bestimmt durch die Kolbenstange (5) und der Innenwandung der Ventilhülse (19), mindestens eine Strömungsverbindung (33) besteht.

14. Schwingungsdämpfer nach Anspruch 13,
**dadurch gekennzeichnet,**
**dass** die Strömungsverbindung (33) von einer Längsnut in der Innenwandung der Ventilhülse (19) gebildet wird.

15. Schwingungsdämpfer nach Anspruch 1,
**dadurch gekennzeichnet,**
**dass** der Ventilring (27) einer Reibring (45) und einen zum Reibring radial beweglichen Dichtring (47) umfasst, der den Zustrom in die Ventilöffnung (53) beeinflusst.

16. Schwingungsdämpfer nach Anspruch 15.
**dadurch gekennzeichnet,**
**dass** der Dichtring (47) den Reibring (45) außenseitig umschließt und einen Mantelabschnitt und einen Boden (49) umfasst, wobei sich der Reibring (45) innenseitig am Boden (49) abstützt.

17. Schwingungsdämpfer nach Anspruch 1,
**dadurch gekennzeichnet,**
**dass** die Arbeitskammer 31 zwischen dem Ventilring 27 und einem Deckel 39 der Ventilhülse (19) eine Drosselöffnung (41) zum kolbenstangenseitigen Arbeitsraum (11) aufweist.

18. Schwingungsdämpfer nach Anspruch 17,
**dadurch gekennzeichnet,**
**dass** die Drosselöffnung (41) von dem Deckel (39) in Verbindung mit einer zur Ventilhülse verspannten Drosselscheibe gebildet wird.
